# EUROPEAN PATENT SPECIFICATION

(11) **EP 1 731 739 B1**
(45) Date of publication and mention of the grant of the patent: **10.05.2017**
(21) Application number: 05721696.2
(22) Date of filing: 29.03.2005
(51) Int. Cl.: F02D 35/00, F02M 35/10, G01L 23/24

(54) **PRESSURE SENSOR FOR FUEL INJECTION DEVICE**
DRUCKSENSOR FÜR KRAFTSTOFFEINSPRITZVORRICHTUNG
CAPTEUR DE PRESSION POUR DISPOSITIF D'INJECTION DE CARBURANT

(30) Priority: 30.03.2004 JP 2004098554
(43) Date of publication of application: 13.12.2006
(73) Proprietor: Keihin Corporation, Tokyo 163-0539 (JP)
(72) Inventor: KOJIMA, Yoji c/o Kawasaki plant Keihin Corp.;, Kawasaki-shi, Kanagawa 211-8580 (JP)
(74) Representative: Viering, Jentschura & Partner mbB Patent- und Rechtsanwälte
(86) International application number: PCT/JP2005/006556
(87) International publication number: WO 2005/095776

(56) References cited:
- EP-A2- 0 995 980
- DE-A1- 10 006 657
- DE-A1- 10 228 000
- DE-A1- 19 813 756
- JP-A- 7 279 705
- JP-A- 8 261 080
- JP-A- 9 264 167
- JP-A- 10 141 112
- JP-A- 2001 124 652
- JP-A- 2001 174 355
- JP-U- 60 081 234
- US-A- 4 969 354
- US-A- 5 412 994

## Description

### Technical Field

The present invention relates to a pressure sensor detecting an absolute pressure within a throttle body constituting a fuel injection device, or a suction air passage provided so as to pass through a suction air pipe, and more particularly to a semiconductor type pressure sensor in which a pressure conversion element amplifies a change on the basis of a pressure distortion of an electric current circulating through a resistance formed in a bridge shape on a silicone chip so as to output while utilizing a piezo resistance effect of the chip, and this pressure sensor is used as one signal at a time of measuring a suction air flow rate in a fuel injection device.

### Background Art

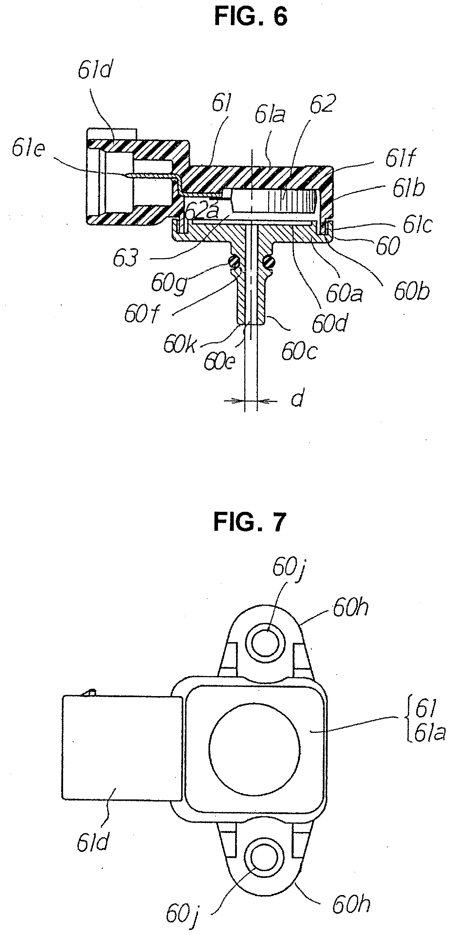

A pressure sensor used in a conventional fuel injection device is disclosed in Figs. 6 and 7.

Fig. 6 is a vertical sectional view of a main portion of a pressure sensor, and Fig. 7 is a plan view of an upper portion of the pressure sensor shown in Fig. 6.

Reference numeral 60 denotes a first casing arranged in a lower side in the drawing. The first casing is structured as follows.

Reference symbol 60a denotes a first collar portion formed in a thick disc shape in an upper portion of the first casing. An annular groove portion 60b which is open in a ring shape toward an upper side is provided in an outer peripheral portion of the first collar portion 60a.

Further, a negative pressure introduction boss 60c is formed in a center portion of the first collar portion 60a so as to protrude toward a lower side, and a negative pressure introduction path 60e is pierced through from a lower end of the negative pressure introduction boss 60c toward an upper surface 60d of the first collar portion 60a. Further, a ring groove 60f is provided in an outer periphery of the negative pressure introduction boss 60c, and an O-ring 60g for seal is installed within the ring groove 60f.

Further, a mounting flange 60h extending toward a side portion is formed in the first casing 60, and a mounting hole 60j is provided in the mounting flange 60h.

Reference numeral 61 denotes a second casing arranged in an upper side of the first casing 60. The second casing 61 is structured as follows.

Reference symbol 61a denotes a second collar portion formed in a thick disc shape in an upper portion of the second casing. A tube portion 61b is formed toward a lower side in an outer peripheral portion thereof, and a ring-shaped thin tube portion 61c going into the annular groove portion 60b of the first casing 60 from a lower end of the tube portion 61b is formed toward a lower side. Further, a connector portion 61d with an opening is provided toward a left side from the second casing 61, one end of a terminal 61e out-molded within the second casing 61 is arranged so as to protrude into the connector portion 61d, and the other end thereof is arranged on a bottom surface 61f of the second collar portion 61a.

Reference numeral 62 denotes a semiconductor type pressure sensor in which a resistance is formed in a bridge shape on a silicone chip. The semiconductor type pressure sensor is structured such that a terminal 62a is arranged so as to protrude toward a left side.

The pressure sensor 62 is arranged on the bottom surface 61f of the second collar portion 61a of the second casing 61, and is fixed onto the bottom surface 61f by a fixing means such as adhesion, welding or the like.

In this case, the terminal 62a of the pressure sensor 62 and the other end of the terminal 61e out-molded in the second casing 61 are electrically connected by soldering, electro-deposition or the like.

Further, the first casing 60 and the second casing 61 are fixed by making the thin tube portion 61c of the second casing 61 enter into the annular groove portion 60b of the first casing 60 and adhering or welding the approach portion.

In accordance with the structure mentioned above, a sealed pressure receiving chamber 63 is formed by the upper surface 60d of the first casing 60, an inner peripheral portion of the tube portion 61b of the second casing 61, and the bottom surface 61f of the second casing 61, and the pressure sensor 62 is fixedly arranged within the pressure receiving chamber 63.

Further, the terminal 62a of the pressure sensor 62 is connected to the other end of the terminal 61e out-molded in the second casing 61, and one end of the terminal 61e is arranged to protrude so as to face to an inner side of the connector portion 61d.

Further, the negative pressure introduction path 60e pierced in the first casing 60 is arranged to open within the pressure receiving chamber 63.

Further, the pressure sensor mentioned above is attached to the throttle body in the following manner.

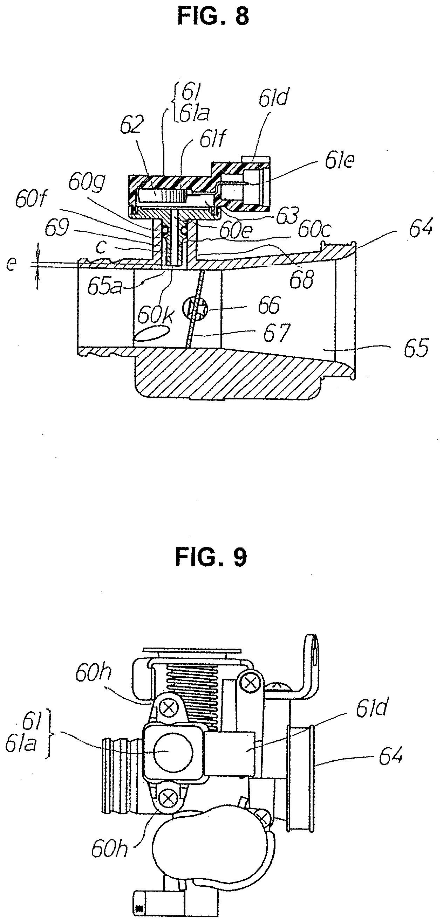

A description will be given with reference to Figs. 8 and 9. Reference numeral 64 denotes a throttle body provided in a state in which a suction air passage 65 passes through an inner portion. An opening area of the suction air passage 65 is controlled by a throttle valve 67 attached to a throttle valve shaft 66.

An upstream side (a right side in the drawing) of the suction air passage 65 is connected to an air cleaner (not shown), and a downstream side (a left side in the drawing) is connected to an engine via a suction air pipe (not shown).

Further, a support boss 68 is formed to protrude on an outer periphery of the throttle body 64, and a support hole 69 is provided so as to pass through from an outer end surface of the support boss 68 toward an inner side of the suction air passage 65.

Further, the negative pressure introduction boss 60c of the pressure sensor is arranged so as to be inserted into the support hole 68 of the throttle body 64, and the pressure sensor is fixed to the throttle body 64 via the mounting hole 60j of the mounting flange 60h of the pressure sensor by screwing. Further, airtightness between the support hole 69 of the throttle body 64 and the negative pressure introduction boss 60c is kept by the O-ring 60g arranged within the ring groove 60f.

Fig. 8 is a vertical sectional view in a state in which the pressure sensor is attached to the throttle body, and Fig. 9 is a plan view of an upper portion of Fig. 8.

In accordance with the structure mentioned above, the pressure generated within the suction air passage 65 is introduced into the pressure receiving chamber 63 via the support hole 69 and the pressure introduction path 60e, and the pressure sensor 62 senses the pressure within the pressure receiving chamber 63, and outputs an electric signal corresponding to the pressure via the terminal 62a.

DE 100 06 657 A1 discloses a pressure sensor for a fuel injection device comprising a pressure receiving chamber formed by a first casing and a second casing; a pressure sensor arranged so as to be contained within said pressure receiving chamber.

JP 9 264 167 A discloses a pressure sensor for a fuel injection device.

Another pressure sensor for a fuel injection device is disclosed in EP 0 995 980 A2.

### Disclosure of the Invention

In accordance with the conventional pressure sensor mentioned above, the negative pressure introduction boss 60c of the pressure sensor is arranged so as to be inserted to the supporthole 69 of the throttle body 64, and it is necessary to accurately position a leading end portion 60k of the negative pressure introduction boss 60c with respect to the inner peripheral surface 65a of the suction air passage 65.

In Fig. 8, it is necessary to keep a distance e between the leading end portion 60k and the inner peripheral surface 65a to be constant.

If any dispersion is generated in the positioning of the leading endportion 60k, a dispersion is generated in the pressure introduced into the pressure receiving chamber 63 from the negative pressure introduction path 60e.

Further, an outer diameter of the negative pressure introduction boss 60c formed below the ring groove 60f is formed smaller than an inner diameter of the support hole 69 of the throttle body 64, whereby an annular gap C is formed between an inner periphery of the support hole 69 and an outer periphery of the negative pressure introduction boss 60c. Since the annular gap C is open so as to face to the inner side of the suction air passage 65, an air stream flowing within the suction air passage 65 generates an eddy current in the annular gap C, and disturbs the pressure applied to the negative pressure introduction path 60e.

Further, it is possible to adjust a response speed of the pressure within the suction air passage 65 with respect to the pressure receiving chamber 63 by changing the passage diameter d of the negative pressure introduction path 60e. It is possible to accelerate the response speed by making the passage diameter d smaller than a reference diameter, and it is possible to decelerate the response speed by making it larger.

In this case, in the structure in which the negative pressure introduction path 60e is pierced in the negative pressure introduction boss 60c, it is hard to make the diameter of the passage larger after once setting the passage diameter d of the negative pressure introduction path 60e.

At the time mentioned above, it is necessary to newly manufacture a metal mold of the first casing 60c so as to make the diameter of the negative pressure introduction boss 60c larger.

Further, the pressure sensor is fixed by screwing to a female thread hole provided in the throttle body via the mounting hole 60j of the first casing 60, and in accordance with the structure mentioned above, it is impossible to freely change an open position of the connector portion 61d formed in the second casing 61. At a time of this change, it is necessary to change a position of the female thread hole of the throttle body or a position of the mounting hole 60j of the first casing 60.

A pressure sensor for a fuel injection device in accordance with the present invention is made by taking the problems mentioned above into consideration, and an object of the present invention is to provide a pressure sensor which can accurately and stably introduce a pressure generated within a suction air passage into a pressure receiving chamber via a negative pressure introduction path.

Another object of the present invention is to provide a pressure sensor which can extremely simply and freely change a response speed of a pressure from an inner side of the suction air passage toward the pressure receiving chamber.

Another object of the present invention is to provide a pressure sensor which can extremely simply change an opening position of a connector portion of the pressure sensor.

According to the present invention, a pressure sensor claimed in claim 1 is provided. The dependent claims define some examples of such a sensor.

In order to achieve the object mentioned above, in accordance with a first aspect of the present invention, there is provided a pressure sensor for a fuel injection device comprising:
a pressure receiving chamber formed by a first casing and a second casing;
a semiconductor type pressure sensor arranged so as to be contained within the pressure receiving chamber; and
a terminal extended out toward an inner side of a connector portion from the pressure sensor,
wherein the first casing and a negative pressure introduction path introducing a pressure in a suction air passage into the pressure receiving chamber are integrally formed in a throttle body or a suction air pipe.

Further, in accordance with a second aspect of the present invention, in addition to the first aspect mentioned above, the second casing is rotatably arranged on the throttle body or the suction air pipe constituting the first casing, and the second casing is fixedly arranged on the first casing by a fixing member after the second casing being positioned in a rotational direction.

Further, in accordance with a third aspect of the present invention, in addition to the second aspect mentioned above, an elastic ring for seal is arranged compressedly in opposing rotation support portions of the second casing and the first casing.

Further, in accordance with a fourth aspect of the present invention, in addition to the second aspect mentioned above, a guide tube portion coaxially formed with a rotation support portion of the second casing is provided so as to protrude on an upper bottom portion of the second casing, and the second casing is fixed to the first casing by screwing a plate corresponding to a fixing member, which is inserted to an outer periphery of the guide tube portion and arranged on an upper bottom portion, to the throttle body or the suction air tube.

Further, in accordance with a fifth aspect of the present invention, in addition to the first aspect mentioned above, the negative pressure introduction hole is open toward a pressure receiving chamber outside a transverse projection plane orthogonal to a center line of the pressure sensor.

In accordance with the first aspect of the present invention, the pressure receiving chamber of the pressure sensor is formed by the first casing and the second casing, and the first casing and the negative pressure introduction path, which connects the pressure receiving chamber and the suction air passage, is integrally formed in the throttle body or the suction air pipe.

The pressure generated within the suction air passage is introduced into the pressure receiving chamber formed in the throttle body via the negative pressure introduction path directly pierced in the throttle body.

In accordance with the structure mentioned above, since the negative pressure introduction path is always arranged to open at a fixed position with respect to an inner peripheral surface of the suction air passage, it is possible to introduce the stable pressure within the suction air passage into the pressure receiving chamber.

Further, since a diameter of the negative pressure introduction path can be made, for example, by selecting a drill diameter at a time of drilling the throttle body, it is possible to extremely simply and inexpensively change a response speed of the pressure generated in the suction air passage with respect to the inner side of the pressure receiving chamber.

Further, in accordance with the second aspect of the present invention, since the second casing is rotatably arranged with respect to the throttle body constituting the first casing, and the second casing is fixedly arranged in the throttle body by the fixing member.

Accordingly, it is possible to make the opening of the connector portion open to an optional position by fixedly arranging the second casing at a desired position, whereby it is possible to provide a pressure sensor having a high general purpose property.

Further, in accordance with the third aspect of the present invention, the throttle body constituting the first casing and the second casing are held airtightly by arranging the elastic ring compressedly in the opposing rotation support portions, and the pressure receiving chamber formed by the first casing and the second casing is shut off from the atmospheric air.

Further, the airtightness between the pressure sensor and the atmospheric air can be achieved only by the elastic ring. (In the conventional pressure sensor, the first seal portion is required in the annular groove portion between the first casing and the second casing, and the O-ring 60g is required in the outer periphery of the negative pressure introduction boss.)

Further, in accordance with the fourth aspect of the present invention, the plate corresponding to the fixing member is arranged on the upper bottom portion of the second casing and is arranged in the outer periphery of the guide tube portion formed so as to protrude to the upper bottomportion of the second casing, and the plate is firmly fixed to the throttle body. Accordingly, the second casing is firmly fixed to the throttle body corresponding to the first casing. At this time, since the guide tube portion is coaxially formed in the rotation support portion of the second casing, it is possible to arrange the second casing freely in the rotational direction with respect to the first casing. Therefore, it is possible to arrange the connector portion toward a desired position.

Further, in accordance with the fifth aspect of the present invention, the pressure introduced toward the inner side of the pressure receiving chamber from the negative pressure introduction path is not directly applied to the pressure sensor.

Accordingly, when a sudden pressure change such as a backfire or the like is generated within the suction air passage, the great pressure is not directly applied to the pressure sensor, and it is possible to prevent the elements or the like contained within the pressure sensor from being broken.

### Brief Description of the Drawings

Fig. 1 is a vertical sectional view showing a first embodiment of a pressure sensor for a fuel injection device in accordance with the present invention;
Fig. 2 is a plan view of an upper portion in Fig. 1;
Fig. 3 is an enlarged vertical sectional view of a main portion of a pressure sensor portion in Fig. 1;
Fig. 4 is a vertical sectional view showing a second embodiment of the pressure sensor for the fuel injection device in accordance with the present invention;
Fig. 5 is an enlarged vertical cross sectional view of a main portion showing another embodiment of the pressure sensor for the fuel injection device in accordance with the present invention;
Fig. 6 is a vertical sectional view of a conventional pressure sensor;
Fig. 7 is a plan view of an upper portion in Fig. 6 ;
Fig. 8 is a vertical sectional view showing a state in which the pressure sensor shown in Fig. 6 is installed to a throttle body; and
Fig. 9 is a plan view of an upper portion in Fig. 8.

### Best Mode for Carrying Out the Invention

A description will be given below of an embodiment of a pressure sensor for a fuel injection device in accordance with the present invention with reference to the accompanying drawings.

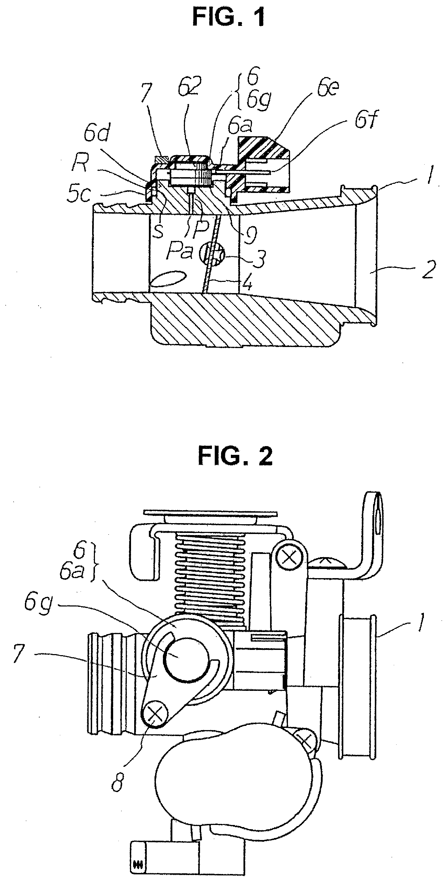

Fig. 1 is a vertical sectional view of a throttle body provided with a pressure sensor.

Fig. 2 is a plan view of an upper portion in Fig. 1.

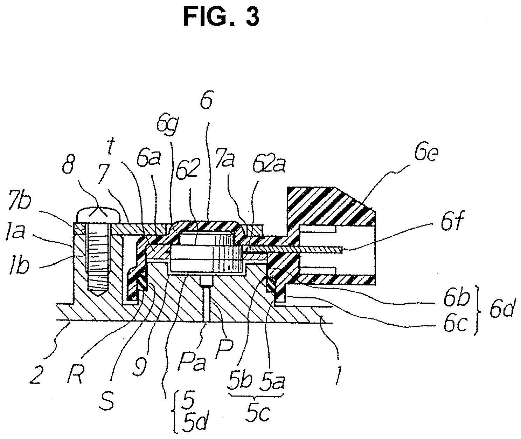

Fig. 3 is an enlarged vertical sectional view of a main portion of the pressure sensor in Fig. 1.

Reference numeral 1 denotes a throttle body in which a suction air passage 2 is provided through in an inner portion. The suction air passage 2 is opened and closed by a throttle valve 4 attached to a throttle valve shaft 3.

Reference numeral 5 denotes a first casing integrally formed in the throttle body 1. The first casing 5 is structured as follows.

Reference symbol 5a denotes a cylindrical first tube portion formed in an outer periphery of the throttle body 1 so as to protrude toward an upper side. A cylindrical second tube portion 5b having a smaller diameter than the first tube portion 5a is formed so as to protrude toward a further upper side from an upper end of the first tube portion 5a.

The first tube portion 5a and the second tube portion 5b form a rotation support portion 5c in the first casing 5 side.

Further, reference symbol P denotes a negative pressure introduction path directly pierced in the throttle body 1 corresponding to the first casing 5. A lower end thereof is open toward the suction air passage 2, and an upper end thereof is open to an upper bottom portion 5d of the second tube portion 5b.

Further, reference symbol 1a denotes a mounting boss provided uprightly on the throttle body 1, and reference symbol 1b denotes a female thread hole provided in the mounting boss 1a.

Reference numeral 6 denotes a cup-shaped second casing arranged so as to face to the first casing 5. A second concave portion 6b to which the second tube portion 5b of the first casing 5 is inserted, and a first concave portion 6c to which the first tube portion 5a of the first casing 5 is inserted are continuously provided from an outer periphery of the upper bottom portion 6a toward a lower side.

The first concave portion 6c and the second concave portion 6b form a rotation support portion 6d in the second casing 6 side.

Reference symbol 6e denotes a connector portion formed so as to open toward an outer side from the rotation support portion 6d of the second casing 6. A right end of a terminal 6f out-molded within the second casing 6 is arranged within the connector portion 6e so as to protrude.

Further, a pressure sensor 62 is fixedly arranged in an inner side of the upper bottom portion 6a of the second casing 6, and a terminal 62a extending to a side portion from the pressure sensor 62 is electrically connected to a left end of the terminal 6f out-molded to the second casing 6 in accordance with welding or the like.

In the present embodiment, the pressure sensor 62 is fixedly arranged by a potting material t.

Further, reference symbol 6g denotes a guide tube portion formed so as to extend to an upper side of the upper bottom portion 6a of the second casing 6. The guide tube portion 6g is coaxially formed with the rotation support portion 6d (the first concave portion 6c and the second concave portion 6b) in the second casing 6 side.

Further, the pressure sensor for the fuel injection device is formed as follows.

First, the second casing 6, in which the pressure sensor 62 is fixedly arranged in the inner portion, is installed to the throttle body 1 corresponding to the first casing 5, the second concave portion 6b of the second casing 6 is inserted to the outer periphery of the second tube portion 5b of the throttle body 1, the first concave portion 6c of the second casing 6 is inserted to the outer periphery of the first tube portion 5a of the throttle body 1, and an elastic ring R such as an O-ring, a square ring or the like made of a rubber material is arranged compressedly within an annular gap S formed between an outer periphery of the second tube portion 5b and an inner periphery of the first concave portion 6c at this time.

Secondly, a plate-shaped fixing member 7 is arranged on the upper bottom portion 6a of the second casing 6, and a first guide hole 7a inserting a guide tube portion 6g of the second casing 6 and a second guide hole 7b for inserting a screw are provided in the fixing member 7.

In other words, the fixing member 7 is arranged on the upper bottom portion 6a of the second casing 6, the first guide hole 7a is inserted toward the guide tube portion 6g, and a screw 8 inserted into the second guide hole 7b is screwed toward the female thread hole 1b of the throttle body 1.

In accordance with the structure mentioned above, the second casing 6 is pressed and fixed toward the throttle body 1 by the fixing member 7. Accordingly, the pressure receiving chamber 9 is formed by the inner portion of the upper bottom portion 6a and the inner portion of the second concave portion 6b in the second casing 6, and the upper bottom portion 5d of the second casing portion 5b corresponding to the first casing 5, and the pressure receiving chamber 9 is held by the elastic ring R so as to be airtight with respect to the atmospheric air and is connected with the suction air passage 2 of the throttle body 1 by the negative pressure introduction path P.

Further, the pressure sensor 62 is fixedly arranged within the pressure chamber 9, the terminal 62a of the pressure sensor 62 is electrically connected to the terminal 6f, and a right end thereof is arranged so as to protrude into the connector portion 6e.

In accordance with the structure mentioned above, the pressure generated within the suction air passage 2 is introduced into the pressure receiving chamber 9 which is in a sealed state via the negative pressure introduction path P, and the pressure sensor 62 senses the pressure within the pressure receiving chamber 9, and outputs an electric signal in correspondence to the pressure from the terminal 6f.

In accordance with the pressure sensor for the fuel injection device on the basis of the present invention having the structure mentioned above, the pressure receiving chamber 9 is formed by the second casing 6 and the throttle body 1 corresponding to the first casing 5, the negative pressure introduction path P is directly pierced in the throttle body 1, an upper end thereof is open to an inner side of the pressure receiving chamber 9, and a lower end thereof is open to the suction air passage 2.

In accordance with the structure mentioned above, an opening Pa of the negative pressure introduction path P to the suction air passage 2 can be always open at a fixed position.

In other words, it is possible to prevent the opening Pa of the negative pressure introduction path P from protruding to the inner side of the suction air passage 2 or being concaved from the suction air passage 2 so as to be open.

In accordance with the structure mentioned above, since it is possible to maintain an eddy current applied to the opening Pa of the negative pressure introduction path P to be constant, it is possible to introduce a stable pressure into the pressure receiving chamber 9 via the negative pressure introduction path P, whereby it is possible to detect an accurate pressure within the suction air passage 2.

Further, it is possible to adjust the response speed of the pressure generated in the suction air passage with respect to the pressure receiving chamber 9 by selecting the hole diameter of the negative pressure introduction path P.

Further, since the negative pressure introduction path P is formed in the throttle body 1, and a sufficient thickness portion is provided in the periphery thereof, it is possible to freely select the hole diameter of the negative pressure introduction path P.

No limitation is applied to the selection of the large diameter and the selection of the small diameter in the drill diameter.

Further, the second casing 6 is rotatably arranged with respect to the throttle body 1 corresponding to the first casing 5, the second casing 6 is rotatably moved with respect to the first casing 5 so as to be positioned, and then the second casing 6 is fixed to the first casing 5 by the fixing member 7 in a state in which the second casing 6 is positioned.

In accordance with the structure mentioned above, it is possible to appropriately set the opening position of the connector portion 6e of the second casing 6 to a desired position, and it is possible to provide the pressure sensor having a high general purpose property.

Further, since the rotational movement of the second casing 6 with respect to the first casing 5 is executed by the rotation support portion 5c (the second tube portion 5b and or the first tube portion 5a) in the first casing 5 side, and the rotation support portion 6d (the second concave portion 6b and the first concave portion 6c) in the second casing 6 side, it is possible to stably support the rotation of the second casing 6.

Further, since the elastic ring R for seal is arranged compressedly in the annular gap S formed between the rotation support portion 5c in the first casing 5 side and the rotation support portion 6d in the second casing 6 side which are arranged so as to be opposed, it is possible to stably keep the airtightness within the pressure receiving chamber 9 at a time when the second casing 6 is rotationally moved.

Further, the guide tube portion 6g is provided so as to protrude on the upper bottom portion 6a of the second casing 6, the guide tube portion is coaxially formed with the rotation support portion 6d (the second concave portion 6b and the first concave portion 6c) in the second casing 6 side, the fixing member 7 fixed by screw to the throttle body 1 is arranged on the upper bottom portion 6a of the second casing 6 and the first guide hole 7a provided in the fixing member 7 is arranged so as to be inserted to the outer periphery of the guide tube portion 6g. Accordingly, it is possible to arrange the second casing 6 so as to be rotatable with respect to the throttle body 1 corresponding to the first casing 5, and the fixing member 7 presses the upper bottom portion 6a of the second casing 6 by fixing and screwing the fixing member 7 with respect to the throttle body 1 by the screw 8, whereby it is possible to position and fix the second casing 6.

In this case, particularly, since the fixing member 7 is formed in a flat plate shape, and the first guide hole 7a and the second guide hole 7b are formed to be simple through holes, it is possible to extremely inexpensively manufacture the fixing member 7 and the assembly thereof can be achieved by arranging the fixing member 7 on the upper bottom portion 6a of the second casing 6 and screwing it toward the throttle body 1 by the screw 8, whereby it is possible to improve a workability.

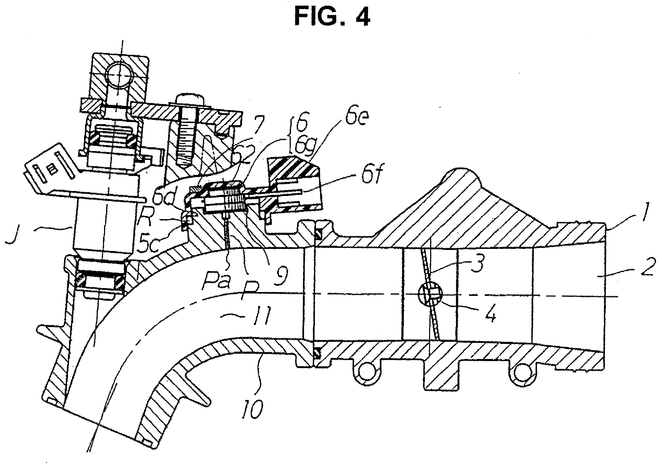

In this case, the embodiment mentioned above is structured such that the throttle body 1 is used as the first casing 5, however, the structure may be made such that the first casing is provided in the suction air pipe 10 having the fuel injection valve J and the suction air passage 11, as shown in Fig. 4.

In this case, the same reference numerals are used for the same constituting portions as those in Fig. 1.

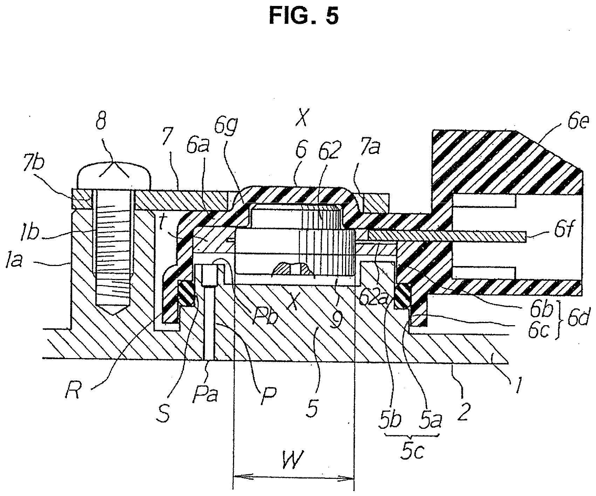

A second embodiment is shown in Fig. 5.

In the present embodiment, the opening Pb of the negative pressure introduction path P to the inner side of the pressure receiving chamber 9 is open at an outer side of a transverse projection plane W in a transverse plane orthogonal to a center line X-X of the pressure sensor 62.

In accordance with the present embodiment, when the sudden pressure change is generated within the suction air passages 2 and 11 due to a backfire or the like, great pressure comes into collision with the wall portion constituting the pressure receiving chamber 9, and is not directly applied to the pressure sensor 62. Accordingly, it is possible to prevent the elements constituting the pressure sensor 62 frombeing broken.

As mentioned above, in accordance with the pressure sensor for the fuel injection device on the basis of the present invention, since the pressure receiving chamber 9 is formed by the second casing 6 and the first casing 5, and the first casing 5 and the negative pressure introduction path P are formed by the throttle body 1 or the suction air pipe 10, it is possible to stably introduce the pressure within the suction air passages 2 and 11 into the pressure receiving chamber 9.

Further, it is possible to freely change the hole diameter of the negative pressure introduction path P, and it is possible to extremely easily and optionally set the response speed of the pressure with respect to the pressure receiving chamber 9.

Further, since the throttle body 1 or the suction air pipe 10 is utilized as the first casing 5, it is possible to achieve a common use of parts, and it is possible to lower a manufacturing cost.

Further, since the second casing 6 is rotatably arranged with respect to the first casing 5, and the second casing 6 is fixed to the first casing 5 by the fixing member 7 after positioning the second casing 6, it is possible to make the opening of the connector portion 6e formed in the second casing 6 to be open toward an optional position, and it is possible to improve a general purpose property.

Further, since the opening Pb of the negative pressure introduction path P to the pressure receiving chamber 9 is open to the outer side of the transverse projection plane W orthogonal to the center line X-X of the pressure sensor 62, it is possible to stably use the pressure sensor 62 for a long term.

## Claims

1. A pressure sensor for a fuel injection device comprising:
a pressure receiving chamber (9) formed by a first casing (5) and a second casing (6), wherein the second casing (6) comprises a rotation support portion (6d);
a semiconductor type pressure sensor (62) arranged so as to be contained within said pressure receiving chamber (9); and
a terminal (62a) extended out toward an inner side of a connector portion (6e) from the pressure sensor (62),
wherein said first casing (5) and a negative pressure introduction path (P) introducing a pressure in a suction air passage (2, 11) into the pressure receiving chamber (9) are integrally formed in a throttle body (1) or a suction air pipe (10)
said connector portion (6e) is formed so as to open toward an outer side from the rotation support portion (6d) of the second casing (6),
**characterized in that**
said second casing (6) is rotatably arranged on the throttle body (1) constituting the first casing (5) or the suction air pipe (10) constituting the first casing (5), and the second casing (6) is fixedly arranged on the first casing (5) by a fixing member (7), the second casing (6) being positioned in a rotational direction.

2. A pressure sensor for a fuel injection device as claimed in claim 1, wherein an elastic ring (R) for seal is arranged compressedly in opposing rotation support portions (5c, 6d) of said second casing (6) and the first casing (5).

3. A pressure sensor for a fuel injection device as claimed in claim 1, wherein a guide tube portion (6g) coaxially formed with a rotation support portion (6d) of the second casing (6) is provided so as to protrude on an upper bottom portion (6a) of said second casing (6), and the second casing (6) is fixed to the first casing (5) by screwing a plate corresponding to a fixing member (7), which is inserted to an outer periphery of the guide tube portion (6g) and arranged on an upper bottom portion (6a), to the throttle body (1) or the suction air pipe (10).

4. A pressure sensor for a fuel injection device as claimed in claim 1, wherein said negative pressure introduction path (P) is open toward a pressure receiving chamber (9) outside a transverse projection plane orthogonal to a center line (X-X) of the pressure sensor (62).

## Patentansprüche

1. Ein Drucksensor für eine Kraftstoffeinspritzvorrichtung aufweisend:
eine Druckaufnahmekammer (9), die durch ein erstes Gehäuse (5) und ein zweites Gehäuse (6) gebildet ist, wobei das zweite Gehäuse (6) einen Rotationsstützabschnitt (6d) aufweist,
einen Drucksensor des Halbleitertyps (62), der so angeordnet ist, dass er innerhalb der Druckaufnahmekammer (9) aufgenommen ist, und
einen Anschluss (62a), der sich von dem Drucksensor (62) nach außen zu einer Innenseite eines Verbindungsabschnitts (6e) erstreckt,
wobei das erste Gehäuse (5) und ein Negativdruck-Einleitungspfad (P), welcher einen Druck in einem Saugluftdurchgang (2, 11) in die Druckaufnahmekammer (9) einleitet, integral in einem Drosselkörper (1) oder einem Saugluftrohr (10) gebildet sind,
wobei der Verbindungsabschnitt (6e) so gebildet ist, dass er sich von dem Rotationsstützabschnitt (6d) des zweiten Gehäuses (6) zu einer Außenseite hin öffnet,
**dadurch gekennzeichnet, dass**
das zweite Gehäuse (6) rotierbar an dem Drosselkörper (1), der das erste Gehäuse (5) bildet, oder an dem Saugluftrohr (10), das das erste Gehäuse (5) bildet, angeordnet ist, und das zweite Gehäuse (6) durch ein Fixierelement (7) an dem ersten Gehäuse (5) fixiert angeordnet ist, wobei das zweite Gehäuse (6) in einer Rotationsrichtung positioniert ist.

2. Ein Drucksensor für eine Kraftstoffeinspritzvorrichtung gemäß Anspruch 1, wobei ein elastischer Ring (R) zum Abdichten komprimiert in gegenüberliegenden Rotationsstützabschnitten (5c, 6d) des zweiten Gehäuses (6) und des ersten Gehäuses (5) angeordnet ist.

3. Ein Drucksensor für eine Kraftstoffeinspritzvorrichtung gemäß Anspruch 1, wobei
ein Führungsrohrabschnitt (6g), der koaxial mit einem Rotationsstützabschnitt (6d) des zweiten Gehäuses (6) gebildet ist, bereitgestellt ist, sodass er an einem oberen Unterseitenabschnitt (6a) des zweiten Gehäuses (6) vorsteht, und
das zweite Gehäuse (6) an dem ersten Gehäuse (5) fixiert ist durch das Anschrauben einer Platte, die einem Fixierelement (7) entspricht, welches an einen Außenumfang des Führungsrohrabschnitts (6g) eingefügt und an einem oberen Unterseitenabschnitt (6a) angeordnet ist, an den Drosselkörper (1) des Saugluftrohrs (10).

4. Ein Drucksensor für eine Kraftstoffeinspritzvorrichtung gemäß Anspruch 1, wobei der Negativdruck-Einleitungspfad (P) zu einer Druckaufnahmekammer (9) hin offen ist, außerhalb einer Querprojektionsebene, die orthogonal zu einer Mittellinie (X-X) des Drucksensors (62) ist.

## Revendications

1. Capteur de pression d'un dispositif d'injection de carburant comprenant :
une chambre de réception de la pression (9) formée par une première enveloppe (5) et par une seconde enveloppe (6), dans lequel la seconde enveloppe (6) comprend une partie support de rotation (6d) ;
un capteur de pression du type à semiconducteur (62) agencé de façon à être contenu à l'intérieur de ladite chambre de réception de la pression (9) ; et
une borne (62a) qui s'étend en dehors vers un côté intérieur d'une partie connecteur (6e) à partir du capteur de pression (62) ;
dans lequel ladite première enveloppe (5) et un chemin d'introduction d'une pression négative (P) qui introduit une pression dans un passage d'air d'aspiration (2, 11) dans la chambre de réception de la pression (9), sont formés d'une pièce dans un corps de papillon (1) ou dans une canalisation d'air d'aspiration (10) ;
ladite partie connecteur (6e) est formée de façon à s'ouvrir vers un côté extérieur à partir de la partie support de rotation (6d) de la seconde enveloppe (6) ;
**caractérisé en ce que** :
ladite seconde enveloppe (6) est agencée de manière rotative sur le corps de papillon (1) qui constitue la première enveloppe (5) ou sur la canalisation d'air d'aspiration (10) qui constitue la première enveloppe (5), et la seconde enveloppe (6) est agencée de manière fixe sur la première enveloppe (5) par un élément de fixation (7), la seconde enveloppe (6) étant positionnée dans une direction de rotation.

2. Capteur de pression d'un dispositif d'injection de carburant selon la revendication 1, dans lequel une bague d'étanchéité élastique (R) est agencée de manière comprimée dans des parties supports de rotation opposées (5c, 6d) de ladite seconde enveloppe (6) et de ladite première enveloppe (5).

3. Capteur de pression d'un dispositif d'injection de carburant selon la revendication 1, dans lequel une partie tube de guidage (6g) formée de manière coaxiale avec une partie support de rotation (6d) de la seconde enveloppe (6), est prévue de façon à faire saillie sur une partie fond supérieure (6a) de ladite seconde enveloppe (6), et la seconde enveloppe (6) est fixée sur la première enveloppe (5) en vissant une plaque qui correspond à un élément de fixation (7), qui est insérée vers la périphérie extérieure de la partie tube de guidage (6g), et qui est agencée sur une partie fond supérieure (6a), vers le corps de papillon (1) ou vers la canalisation d'air d'aspiration (10).

4. Capteur de pression d'un dispositif d'injection de carburant selon la revendication 1, dans lequel ledit chemin d'introduction d'une pression négative (P) est ouvert vers une chambre de réception de la pression (9) à l'extérieur d'un plan de projection transversal orthogonal à la ligne centrale (X - X) du capteur de pression (62).
